# EUROPEAN PATENT APPLICATION

(11) **EP 4 729 738 A1**
(43) Date of publication of application: **22.04.2026**
(21) Application number: 24207898.8
(22) Date of filing: 21.10.2024
(51) Int. Cl.: E05F 15/63, E05D 3/18

(54) **DOOR ASSEMBLY**

(71) Applicant: Motherson Innovations Deutschland GmbH, 70327 Stuttgart (DE)
(72) Inventor: Rhee, GeonHwan, 14556 Bucheon (KR); Lee, KyungJun, 14556 Bucheon (KR); Song, HongGjun, 14556 Bucheon (KR)

(57) **Abstract**

The present subject matter discloses a door assembly mounted on a vehicle that comprises a door with a lever and a pair of arms. The lever is configured with a first connecting member and a second connecting member. The door assembly is configured to open and close the door using the pair of arms. The pair of arms includes a leading arm operatively coupled to a driving unit and a following arm pivotally coupled to a base plate. The leading arm and following arm are coupled to the lever through the first and the second connecting member respectively. Motion is imparted to the leading arm by the driving unit, enabling the lever to facilitate the movement in the following arm to open and close the door.

## Description

The present disclosure generally relates to the field of door assemblies. More particularly, the present disclosure pertains to a door assembly for a vehicle to reduce an area of protrusion of a door in an open position.

Various mechanisms are typically utilized to open and close doors and they vary based on the type of door and its operational systems. Traditionally, door assemblies have employed mechanisms involving connectors such as gooseneck links or hinges. These connectors not only facilitate the connection between the inner door surface and the body of the vehicle but also a protrusion from the body to enable door opening. When the door is fully open, for example extending to about 90 degrees or more from the body, the door requires more space. However, these traditional mechanisms have drawbacks in terms of space limitations for operations. More specifically, the larger the doors, the more they protrude from the body, making them more susceptible to damage from external impacts.

Furthermore, in such traditional mechanisms, the weight of the door is solely supported by these connectors, leading to excessive stress on them. The repetitive opening and closing of the doors induce cyclic loading or fatigue, in addition, to wear and tear, particularly in gooseneck links or hinges, thereby compromising their rigidity and overall operability.

Some approaches or solutions have been attempted in the domain and specifically for automobiles to address a few of such challenges. Patent document US2023/0349205 for example, discloses a vehicle charging door assembly that enhances operability when opened and reduces protrusion. The assembly includes a charging door for opening and closing a charging port on a panel, a main link hinge connecting the vehicle body and inner surface of the charging door, and a sub-link hinge connecting the vehicle body and inner surface of the charging door at a position apart from the main link. This design maintains the charging door's inner surface within a predetermined distance from the panel when opened. However, the complexity of the solution offered in this patent document would lead to excessive stress and wear on the assembly links during repetitive operations.

Therefore, there is a necessity for an improved door assembly and an operating mechanism to address shortcomings of the conventional door assemblies, particularly in reducing door protrusion in an open position and simplifying operations.

This summary is provided to introduce concepts related to a door assembly for opening and closing, the concepts are further described below in the detailed description. This summary is neither intended to identify essential features of the claimed subject matter nor is it intended for use in determining or limiting the scope of the present subject matter.

In an embodiment, the present disclosure relates to a door assembly for opening and closing a charging door or a fuel tank/ gas tank door of vehicles. More particularly, the door assembly reduces area of protrusion of the door in an open position.

In accordance with an embodiment, the door assembly includes a door having a lever configured with a first connecting member and a second connecting member. Additionally, the door assembly includes at least a pair of arms including at least one leading arm and at least one following arm. The at least one leading arm has a first end portion and a second end portion. The first end portion of the at least one leading arm is operatively coupled to a driving unit and the second end portion of the at least one leading arm has a first slot configured to engage with the first connecting member. The at least one following arm has a first end portion and a second end portion. The first end portion of the at least one following arm is pivotally coupled to a base plate and the second end portion of the at least one following arm has a second slot configured to engage with the second connecting member. Motion imparted to the at least one leading arm by the driving unit, enabling the first connecting member to move within the first slot, resulting in the movement of the lever, thereby facilitating the movement of the second connecting member in the second slot.

In an embodiment, the movement of the second connecting member may result in movement of the at least one following arm synchronous to the movement of the at least one leading arm.

In an embodiment, the at least one following arm may be in a skewed parallel position to the at least one leading arm.

In an embodiment, the first connecting member and the second connecting member may have a cam-shaped profile. Further, the first slot of the leading arm and the second slot of the following arm may have profiles corresponding to the cam-shaped profile of the first connecting member and the second connecting member. The cam-shaped profile of each of the connecting members may be configured to engage with the corresponding profile of the first slot and the second slot enabling the synchronous movement of the at least one leading arm and the at least one following arm.

In an embodiment, the lever may be an L-shape structure having a base segment and a vertical segment. The first connecting member and the second connecting member are configured spatially apart at a predefined location of the base segment of the lever. One end of the vertical segment may be coupled to the door and another end of the vertical segment may extend to one end of the base segment.

In an aspect, the door assembly may include a housing to accommodate the lever along with a portion of the at least one leading arm and the at least one following arm.

In another embodiment, the door assembly may be mounted or configured on a charging door, fuel door, or cabin door of a vehicle which facilitates the opening and closing of the door while ensuring minimal protrusion during these operations.

It is an object of the subject matter to provide a door assembly that reduces area of protrusion of a door in an open position.

It is another object of the subject matter to provide a door assembly that reduces wear and tear while operating.

It is another object of the subject matter to provide a door assembly that ensures a smooth transition between a door's open and closed position and vice versa.

These embodiments, and features of the subject matter will become more fully apparent when the following detailed description is read with the accompanying drawings. However, both the foregoing summary of the subject matter and the following detailed description of it represent one potential implementation or embodiment and are not restrictive of the present disclosure or other alternate implementations or embodiments of the subject matter.

A clear understanding of the key features of the subject matter summarized above may be had by reference to the appended drawings, which illustrate the assembly of the subject matter, although it will be understood that such drawings depict preferred embodiments of the subject matter and, therefore, are not to be considered as limiting its scope about other embodiments which the subject matter is capable of contemplating. Accordingly:
FIG. 1A illustrates a schematic representation of a door assembly in a first position, in accordance with an exemplary embodiment of the subject matter;
FIG. 1B illustrates a schematic representation of a door assembly in a pop-up position, in accordance with an exemplary embodiment of the subject matter;
FIG. 1C illustrates a schematic representation of a door assembly in a second position, in accordance with an exemplary embodiment of the subject matter;
FIG. 1D illustrates a schematic representation of a door assembly in a third position, in accordance with an exemplary embodiment of the subject matter;
FIG. 1E illustrates a schematic representation of an engagement of connecting members and slots of a pair of arms in the first position of the door assembly of FIG. 1A, in accordance with an exemplary embodiment of the subject matter:
FIG. 1F illustrates a schematic representation of an engagement of a connecting member and slots of a pair of arms in the pop-up position of the door assembly of FIG. 1B, in accordance with an exemplary embodiment of the subject matter:
FIG. 1G illustrates a schematic representation of an engagement of a connecting member and slots of a pair of arms in the second position of the door assembly of FIG. 1C, in accordance with an exemplary embodiment of the subject matter:
FIG. 1H illustrates a schematic representation of an engagement of a connecting member and slots of a pair of arms in the third position of the door assembly of FIG. 1D, in accordance with an exemplary embodiment of the subject matter:
FIG. 2 illustrates a schematic representation of a door assembly configured on a vehicle to open and close a charging door, in accordance with an exemplary embodiment of the subject matter.

The following is a detailed description of embodiments of the present disclosure depicted in the accompanying drawings. The embodiments are in such detail as to clearly communicate the disclosure. However, the amount of detail offered is not intended to limit the embodiments, but it is to cover all modifications, equivalents, and alternatives falling within the spirit and scope of the present disclosure. While aspects of described door assemblies can be implemented in any number of different environments, applications, and/or configurations, the embodiments are described in the context of the following exemplary configuration(s).

It is understood that the term "vehicle" or "vehicular" or other similar terms as used herein are inclusive of motor vehicles, in general, such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred herein, a hybrid vehicle is a vehicle that has two or more sources of power, for example, both gasoline-powered and electric-powered vehicles.

An embodiment of the present disclosure relates to the field of door assemblies. More particularly, the present disclosure pertains to a door assembly for a vehicle to reduce an area of protrusion of a door in an open position.

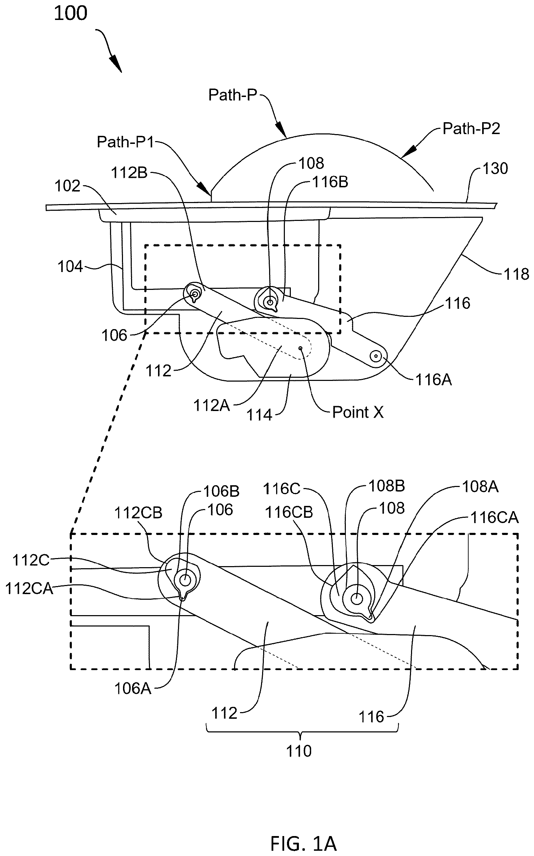

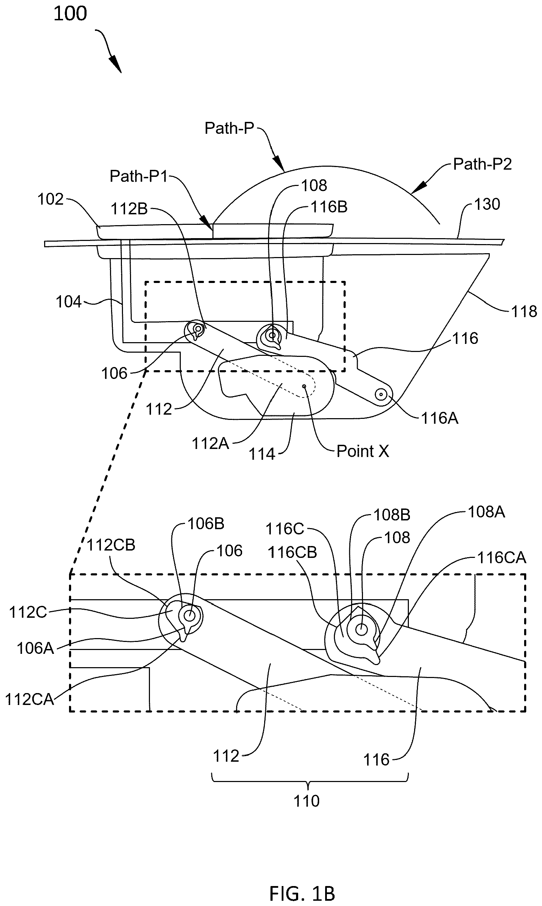

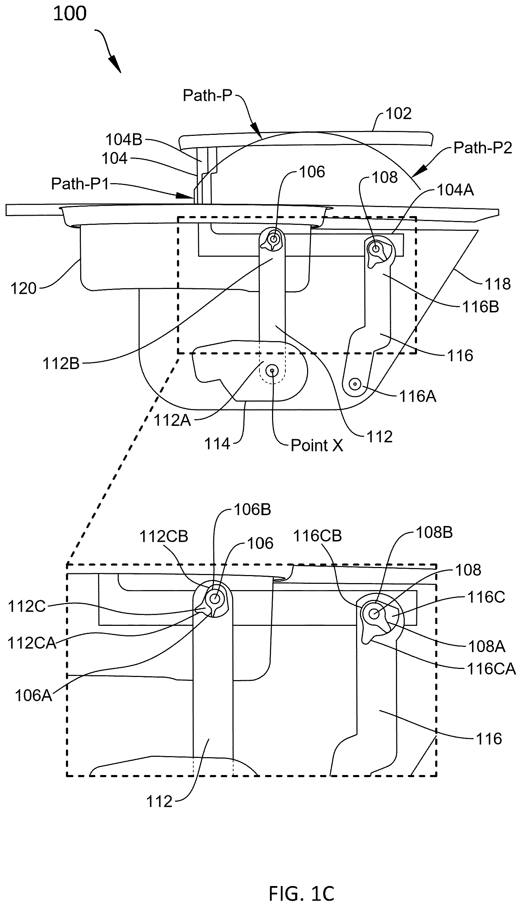

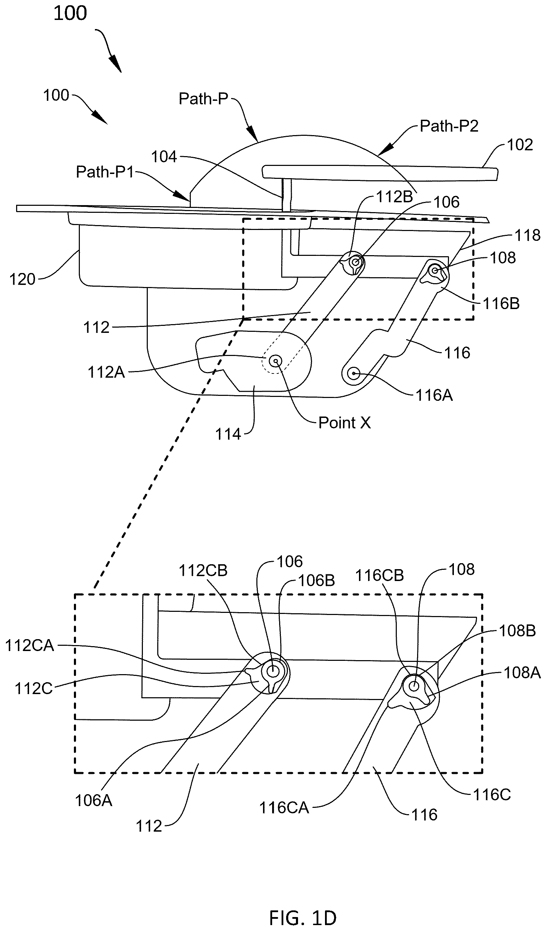

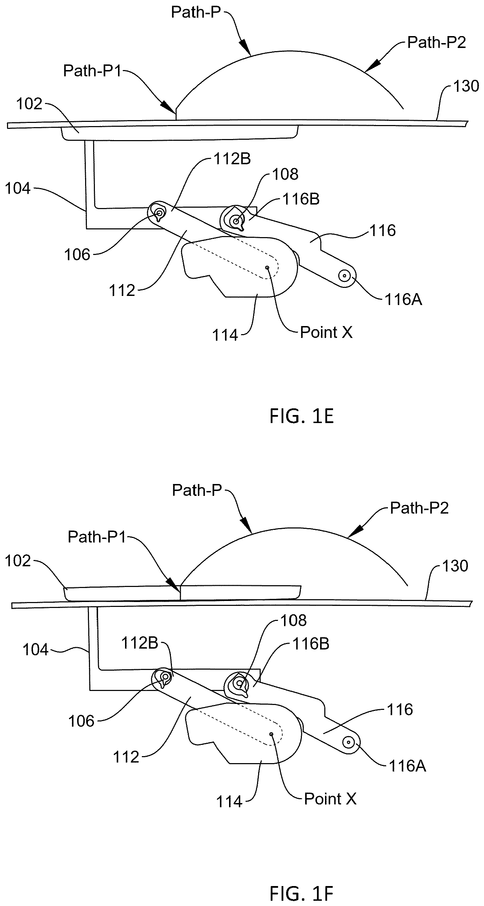

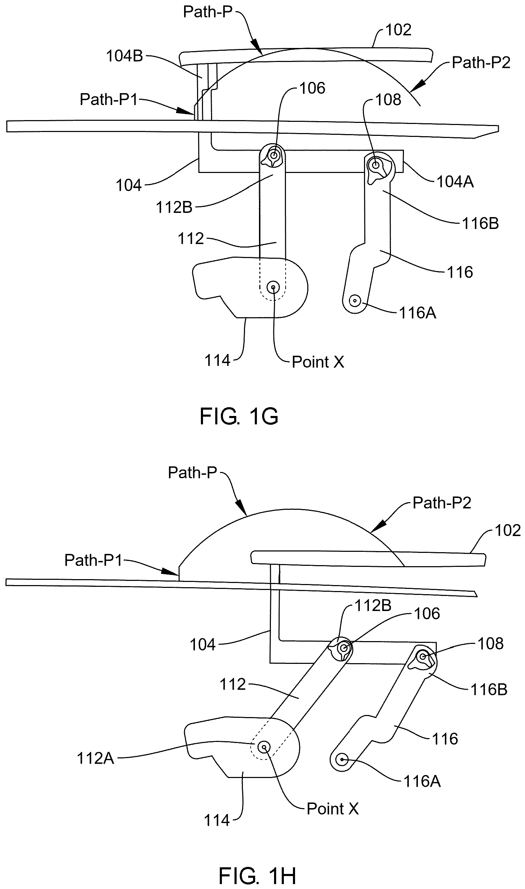

Referring to FIGs. 1A to 1D, a schematic representation of a door assembly 100 in multiple positions including a first position (closed position), a pop-up position, a second position, and a third position (open position) is disclosed. The door assembly 100 (hereinafter referred to as assembly 100) includes a door 102 configured to move from the first position to the third position and from the third position to the first position. The door 102 has a lever 104 configured with a first connecting member 106 and a second connecting member 108. Further, the assembly 100 includes at least a pair of arms 110 having at least one leading arm 112 (referred to as a leading arm 112 hereafter) and at least one following arm 116 (referred to as a following arm 116 hereafter).

The leading arm 112 has a first end portion 112A and a second end portion 112B. The first end portion 112A of the leading arm 112 is operatively coupled to a driving unit 114 and the second end portion 112B of the leading arm 112 has a first slot 112C configured to engage with the first connecting member 106. The following arm 116 has a first end portion 116A and a second end portion 116B. The first end portion 116A of the following arm 116 is pivotally coupled to a base plate 118 and the second end portion 116B of the following arm 116 has a second slot 116C configured to engage with the second connecting member 108. Motion is imparted to the leading arm 112 by the driving unit 114, enabling the first connecting member 106 to move within the first slot 112C, resulting in the movement of the lever 104, thereby facilitating the movement of the second connecting member 108 in the second slot 116C.

In an embodiment, the driving unit 114 may be configured on the base plate 118 and operatively coupled to the first end portion 112A of the leading arm 112 to rotate/swivel about a pivot point X (as depicted in FIG. 1A). The swiveling of the leading arm 112 facilitate movement of the first connecting member 106 within the first slot 112C which enables the lever 104 to facilitate movement of the second connecting member 108 within the second slot 116C. The movement of the second connecting member 108 results in the movement of the following arm 116 synchronous to the movement of the leading arm 112. The movement of the leading arm 112 and the following arm 116 facilitate the door 102 to follow a predefined path-P which minimizes an area of protrusion during opening and closing of the door 102.

In an embodiment, the path-P includes path-P1 and path-P2. The path-P 1 represents a substantially vertical trajectory and the path-P2 represents a curved trajectory. The path-P1 starts from the first position (closed position) to a pop-up position and the path-P2 starts from the pop-up position to the third position (open position). The pop-up position is an outcome of the substantially vertical movement of the door 102 by following the substantially vertical trajectory of the path-P1, to move above the surface of a body 130, thereby allowing the door 102 to subsequently follow path-P2.

In an embodiment, the following arm 116 and the leading arm 112 may have structures that help to minimize the area of protrusion of the door 102 which maintains minimal space between the door 102 and the body 130 when the door 102 is in the open position. Additionally, the structure of the leading arm 112 and the following arm 116 allow the door 102 to open in confined spaces, such as crowded parking areas or narrow garages using the lever 104. Furthermore, the following arm 116 may be in a skewed parallel position to the leading arm 112 to minimize vibration and torsional stress, which can be particularly beneficial in maintaining the structural integrity of the assembly 100 over prolonged use.

In an embodiment, the first connecting member 106 and the second connecting member 108 may have a cam-shaped profile. Further, the first slot 112C and the second slot 116C may have profiles corresponding to the cam-shaped profile of the first connecting member 106 and the second connecting member 108. The cam-shaped profile of each connecting member 106, and 108 may be configured to engage with the corresponding profile of the first slot 112C and the second slot 116C.

In an embodiment, the lever 104 may be an L-shape structure having a base segment 104A and a vertical segment 104B. The first connecting member 106 and the second connecting member 108 may be configured spatially apart at a predefined location on the base segment 104A of the lever 104. Further, one end of the vertical segment 104B may be coupled to the door 102 and another end extends to the base segment 104A.

In an embodiment, the assembly 100 may include a housing 120 to accommodate the lever 104 along with a portion of the leading arm 112 and the following arm 116 Further, the housing 120 may accommodate a charging port/ fuel port and the like.

In an embodiment, the first connecting member 106 and the second connecting member 108 are positioned spatially apart along the base segment 104A. The configuration of the first connecting member 106 and the second connecting member 108 ensures a compact arrangement and efficient space utilization within the assembly 100.

Referring to FIGs. 1E to 1H, a schematic representation of an engagement of the connecting members 106, 108, and slots 112C, and 116C in multiple positions of the door assembly 100 of FIGs. 1A to 1D is disclosed. The multiple positions include the first position (closed position), the pop-up position, the second position (maximum extended position of the door 102), and the third position (open position). In an embodiment, the cam-shaped profile of the first connecting member 106 may have a first nose portion 106A and a first circular profile 106B. Further, the cam-shaped profile of the second connecting member 108 may have a second nose portion 108A and a second circular profile 108B. In an embodiment, the first slot 112C of the leading arm 112 may have a first cavity 112CA and a first circular profile 112CB. The second slot 116C of the following arm 116 may have a second cavity 116CA and a second circular profile 116CB.

In an embodiment, the first cavity 112CA and the second cavity 116CA may be configured to engage with the first nose portion 106A and the second nose portion 108A of the first connecting member 106 and the second connecting member 108, respectively in the closed position.

In an embodiment, the movement of the leading arm 112 enables the first cavity 112CA of the first slot 112C to disengage with the first nose portion 106A of the first connecting member 106.

At the moment of the disengagement of the first cavity 112CA and the first nose portion 106A enables the lever 104 to facilitate movement to the second cavity 116CA to disengage with the second nose portion 108A of the second connecting member 108. The disengagement of the first cavity 112CA and the first nose portion 106A, as well as the second cavity 116CA and the second nose portion 108A, occurs synchronously. The disengagement of the first nose portion 106A and the second nose portion 108A moves the lever 104 to thereby move the door 102 from the first position to the pop-up position following the path-P1.

Further movement of the leading arm 112 enables the first nose portion 106A of the first connecting member 106 to follow the first circular profile 112CB of the first slot 112C which leads to the movement of the lever 104. Simultaneously, the movement of the lever 104 enables the second nose portion 108A of the second connecting member 108 to follow the second circular profile 116CB of the second slot 116C. The leading arm 112 and the following arm 116 move synchronously to facilitate opening and closing the door 102 using the first connecting member 106 and the second connecting member 108. Similarly, the door 102 may be moved from the third position (open position) to the first position (closed position) following the path P and more specifically, following the path-P2 first and thereafter path-P1 to close the door 102. The assembly 100 may be configured to move the door 102 from the first position to the third position and from the third position back to the first position to complete the open and close cycle.

In an exemplary embodiment, the first nose portion 106A of the first connecting member 106 and the second nose portion 108A of the second connecting member 108 may be designed with a specific angle or curvature to ensure secure engagement within the corresponding cavities 112CA, 116CA of the first slot 112C and the second slot 116C, respectively. The circular profiles 112CB and 116CB of the first slot 112C and the second slot 116C may be configured to assist in aligning the connecting members 106 and 108 as they move within the slots 112C and 116C.

In an exemplary embodiment, the driving unit 114 can be an electric motor equipped with a gearbox to regulate the speed of the leading arm 112. The electric motor may be coupled to an external power source and an electronic control unit (ECU). The external power source can be a rechargeable battery, renewable power source, or any other type of power source to supply power to the electric motor to rotate/swivel the leading arm 112. The electronic control unit (ECU) may be configured to regulate the power supply to the electric motor. Further, the electronic control unit (ECU) may be configured to regulate the rotation of a driving shaft of the electric motor. The driving shaft of the electric motor may be coupled to the gearbox for smooth movement of the leading arm 112.

In another exemplary embodiment, when the door 102 cannot be opened due to a failure of the driving unit 114, the vehicle 150 may provide a manual override option. In this scenario, the assembly 100 may include a manual release mechanism that allows the user to open the door 102 without the use of the driving unit 114. Specifically, the door 102 may be opened manually by pushing it inward (into the body of the vehicle). This action triggers the assembly 100 to partially disengage the door 102 from its locked position, allowing it to pop out slightly. Once the door 102 is released from its locked position, the user may either pull or slide the door 102 manually to the open position. The manual operation may be facilitated by a set of mechanical linkages or members including but not limited to leading arm 112 and following arm 116 within the assembly 100, which may be designed to additionally respond to such manual push by the user. This ensures that even in the absence of power or if the driving unit 114 fails, the door 102 can still be accessed and operated safely. Additionally, visual or tactile indicators may be provided to guide the user in performing the manual operation, ensuring ease of use and accessibility during emergencies.

In an exemplary embodiment, the assembly 100 is not limited to a single pair of arms 110. The number of pairs of arms may vary depending on the size and specific requirements of the assembly 100. The assembly 100 may include multiple pairs of arms, with each pair potentially featuring at least one leading arm or more than one leading arm. The configuration and number of leading arms can be adjusted to optimize the performance and functionality of the assembly 100 according to its intended application.

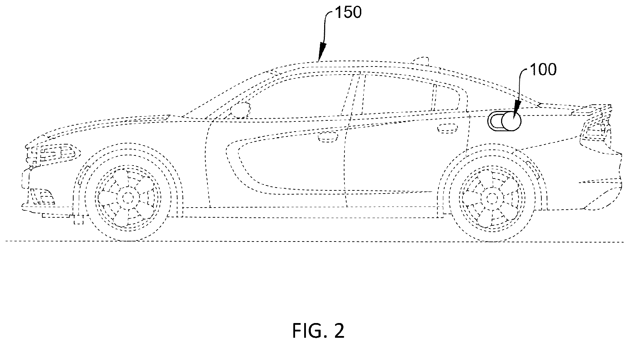

Referring to FIG. 2, a schematic diagram of the door assembly 100 configured in a vehicle 150 is illustrated. The door assembly 100 is designed to open and close a charging door/ fuel/gas tank door or cabin (collectively referred to as the door 102) of the vehicle 150, ensuring that the door 102 follows path-P. Further, the door 102 may be placed substantially parallel to the (surface) body 130 of the vehicle 150 in the open position which leads to minimum area occupancy by the door 102.

In one implementation, the assembly 100 is versatile and can also be adapted for use in cabin doors of the vehicle 150. This configuration facilitates smooth and controlled opening and closing of the cabin doors, enhancing passenger convenience and safety including space-saving during ingress or egress. The mechanism can be integrated with the vehicle's electronic systems to allow for automatic or remote-controlled operation, adding to the overall functionality and user experience. The robust design ensures durability and reliability, making it suitable for various vehicle types and conditions.

In one implementation, the assembly 100 can be integrated into various types of vehicles, ranging from cars to trucks and other motor vehicles. Another function of the assembly 100 lies in ensuring smooth operation even in challenging conditions, such as malfunctions during vehicle operations. The assembly 100 enhances the reliability and durability of components. Furthermore, the placement of the assembly 100 within the vehicle 150 facilitates convenient access to crucial elements like seats, charging ports, or fuel ports. For instance, when the assembly 100 is integrated into the vehicle doors or bonnet, it can efficiently control the opening and closing of the charging port or fuel/gas tank port or bonnet of the vehicle, facilitating hassle-free charging/fuelling/ maintenance processes.

In some advanced embodiments, the assembly 100 may include connectivity features, such as integration with the electronic control unit (ECU) or mobile applications. The connectivity can enable remote operation of the fuel or cabin door, allowing users to open or close the door 102 using a smartphone or other devices. Such features can enhance user convenience and provide additional functionalities like remote monitoring of the door 102 status or integration with security systems to alert the owner of unauthorized access attempts.

The assembly 100 represents a significant advancement in vehicle technologies, addressing key concerns regarding reducing the protrusion area of the door 102 in an open position which enhances operational reliability and accessibility of the charging or fuel ports of the vehicle 150. Further, the integration of the assembly 100 into the structure of the vehicle 150 not only enhances the aesthetic appeal but also contributes to the overall efficiency and convenience of the vehicle 150. The assembly 100 enables quick and easy access to charging ports of electric vehicles or ensures the secure opening and closure of fuel ports. The assembly 100 serves as a vital component in modernizing and optimizing the closing and opening of the door 102.

The assembly 100 may also be customizable to suit different vehicle designs and user preferences. This customization can include options for different opening mechanisms and various materials and finishes to match the vehicle's aesthetics. Moreover, the assembly 100 can be designed to operate silently and smoothly, enhancing the overall user experience.

In an embodiment, the assembly 100 reduces the area of protrusion of the door 102 that allows the door 102 to open and close in less space such as crowded parking areas or narrow garages. Further, the assembly 100 ensures a smooth transition between the open and closed positions of the door 102 and vice versa reducing wear and tear while operating.

The foregoing description of various variations have been presented for purposes of illustration and description. It is not intended to be exhaustive or to limit the disclosure to the precise forms disclosed, and obviously, many modifications and variations are possible in light of the above teaching. The example variations, as described above, were chosen and described in order to best explain the principles of the disclosure and one of its practical applications.

### Reference Signs

100 - door assembly
102 - door
104 - lever
104A - base segment of lever
104B - vertical segment of lever
106 - first connecting member
106A - first nose portion of first connecting member
106B - first circular profile of first connecting member
108 - second connecting member
108A - second nose portion of second connecting member
108B - second circular profile of second connecting member
110 - pair of arms
112 - leading arm
112A - first end portion of leading arm
112B - second end portion of leading arm
112C - first slot
112CA - first cavity of first slot
112CB - first circular profile of of first slot
114 - driving unit
116 - following arm
116A - first end portion of following arm
116B - second end portion of following arm
116C - second slot
116CA - second cavity of second slot
116CB - second circular profile of second slot
118 - base plate
120 - housing
130 - body
150 - vehicle

## Claims

1. A door assembly (100) comprising:
a door (102) having a lever (104) configured with a first connecting member (106) and a second connecting member (108);
at least a pair of arms (110) having at least one leading arm (112) and at least one following arm (116);
the at least one leading arm (112) having a first end portion (112A) and a second end portion (112B), the first end portion (112A) operatively coupled to a driving unit (114), and the second end portion (112B) having a first slot (112C) configured to engage with the first connecting member (106); and
the at least one following arm (116) having a first end portion (116A) and a second end portion (116B), the first end portion (116A) pivotally coupled to a base plate (118), and the second end portion (116B) having a second slot (116C) configured to engage with the second connecting member (108);
**characterized in that**
motion imparted to the at least one leading arm (112) by the driving unit (114), enables the first connecting member (106) to move within the first slot (112C), resulting in the movement of the lever (104), thereby facilitating the movement of the second connecting member (108) in the second slot (116C).

2. The door assembly (100) as claimed in claim 1, wherein the movement of the second connecting member (108) results in movement of the at least one following arm (116) synchronous to the movement of the at least one leading arm (112).

3. The door assembly (100) as claimed in claim 1, wherein the at least one following arm (116) is in skewed parallel position to the at least one leading arm (112).

4. The door assembly (100) as claimed in claim 1, wherein the first connecting member (106) and the second connecting member (108) have a cam-shaped profile.

5. The door assembly (100) as claimed in claim 4, wherein the first slot (112C) and the second slot (116C) have profiles corresponding to the cam-shaped profiles of the first connecting member (106) and the second connecting member (108).

6. The door assembly (100) as claimed in claim 4, wherein the cam-shaped profile of each of the connecting members (106, 108) is configured to engage with the corresponding profile of the first slot (112C) and the second slot (116C) enabling the synchronous movement of the at least one leading arm (112) and the at least one following arm (116).

7. The door assembly (100) as claimed in claim 1, wherein the lever (104) is defined as an L-shape structure having a base segment (104A) and a vertical segment (104B).

8. The door assembly (100) as claimed in claim 7, wherein the first connecting member (106) and the second connecting member (108) are configured spatially apart at a predefined location of the base segment (104A) of the lever (104).

9. The door assembly (100) as claimed in claim 7, wherein one end of the vertical segment (104B) is coupled to the door (102) and another end of the vertical segment (104B) extends to one end of the base segment (104A).

10. The door assembly (100) as claimed in claim 1, further comprises a housing (120) to accommodate the lever (104) along with a portion of the at least one leading arm (112) and the at least one following arm (116).

11. A vehicle (150) comprising the door assembly (100) as claimed in claims 1-10.
